# EUROPEAN PATENT APPLICATION

(11) **EP 4 836 275 A1**
(43) Date of publication of application: **04.11.2026**
(21) Application number: 25830200.9
(22) Date of filing: 04.04.2025
(51) Int. Cl.: H02M 5/257

(54) **ELECTRIC POWER CONVERSION CIRCUIT AND PROGRAM**

(30) Priority: 19.06.2024 JP 2024098887
(71) Applicant: Murata Manufacturing Co., Ltd., Nagaokakyo-shi, Kyoto 617-8555 (JP)
(72) Inventor: BHAGAT Chinmay, Nagaokakyo-shi, Kyoto 617-8555 (JP); ISHIKURA Yuki, Nagaokakyo-shi, Kyoto 617-8555 (JP)
(74) Representative: Lorenz Seidler Gossel Part. mbB
(86) International application number: PCT/JP2025/013756
(87) International publication number: WO 2025/263072

(57) **Abstract**

A controller (33) includes a plurality of bidirectional switches (TSW), and a controller (33). The controller is capable of controlling the bidirectional switches (TSW) according to a first switching sequence or a second switching sequence. The controller (33) is configured to, during a specific interval, control the bidirectional switches according to the first switching sequence. The controller (33) is configured to, during a transition interval, control the bidirectional switches according to the second switching sequence. The combinations of ON/OFF states of the bidirectional switches (TSW) defined by the second switching sequence are fewer than the combinations of ON/OFF states of the bidirectional switches (TSW) defined by the first switching sequence.

## Description

### Technical Field

The present disclosure relates to a power conversion circuit and a program.

### Background Art

A power conversion circuit disclosed in Patent Document 1 includes three input terminals, a plurality of switching elements, and a controller. The three input terminals are connected to a three-phase alternating-current (AC) power source. The controller is configured to, through input of a pulse width modulation (PWM) signal to each switching element, control the ON/OFF of individual switching elements. The power conversion circuit is configured to, through ON/OFF control of the switching elements, convert three-phase AC voltage input at each input terminal into direct-current (DC) voltage.

### Citation List

### Patent Document

Patent Document 1: U.S. Patent Application Publication No. 2018/0262103

### Summary of Invention

### Technical Problem

With the power conversion circuit in Patent Document 1, a situation may arise where, upon input of a PWM signal with a short pulse width to a particular switching element, the switch fails to switch ON as intended. This may cause electrical stress on one of the switching elements. Solution to Problem

To address the above-mentioned problem, the present disclosure provides a power conversion circuit including a first input terminal, a second input terminal, a third input terminal, a first output terminal, a second output terminal, a plurality of bidirectional switches, and a controller. The first input terminal, the second input terminal, and the third input terminal are connected to a three-phase AC power source. A first voltage, a second voltage, and a third voltage are respectively input to the first input terminal, the second input terminal, and the third input terminal. The first voltage, the second voltage, and the third voltage are AC voltages that differ in phase. The first output terminal and the second output terminal are configured to output AC power. The plurality of bidirectional switches are each connected between: the first input terminal, the second input terminal, and the third input terminal; and the first output terminal and the second output terminal. The controller is capable of controlling the plurality of bidirectional switches according to a first switching sequence or a second switching sequence. The first switching sequence defines a plurality of combinations of ON/OFF states of the plurality of bidirectional switches and an order of switching the plurality of combinations. The second switching sequence defines, in a manner different from the first switching sequence, a plurality of combinations of ON/OFF states of the plurality of bidirectional switches and an order of switching the plurality of combinations. An interval from a phase at which one of the first voltage, the second voltage, or the third voltage becomes zero to a phase separated from the phase by a predetermined angle is defined as a transition interval. A phase interval temporally contiguous with the transition interval is defined as a specific interval. The controller is configured to, during the specific interval, control the plurality of bidirectional switches according to the first switching sequence, and during the transition interval, control the plurality of bidirectional switches according to the second switching sequence. The plurality of combinations of ON/OFF states of the plurality of bidirectional switches defined by the second switching sequence are fewer than the plurality of combinations of ON/OFF states of the plurality of bidirectional switches defined by the first switching sequence.

Further, the present disclosure provides a program for use in a power conversion circuit. The power conversion circuit includes a first input terminal, a second input terminal, a third input terminal, a first output terminal, a second output terminal, a plurality of bidirectional switches, and a controller. The first input terminal, the second input terminal, and the third input terminal are connected to a three-phase AC power source. A first voltage, a second voltage, and a third voltage are respectively input to the first input terminal, the second input terminal, and the third input terminal. The first voltage, the second voltage, and the third voltage are AC voltages that differ in phase. The first output terminal and the second output terminal are configured to output AC power. The plurality of bidirectional switches are each connected between: the first input terminal, the second input terminal, and the third input terminal; and the first output terminal and the second output terminal. The controller is capable of controlling the plurality of bidirectional switches according to a first switching sequence or a second switching sequence. The first switching sequence defines a plurality of combinations of ON/OFF states of the plurality of bidirectional switches and an order of switching the plurality of combinations. The second switching sequence defines, in a manner different from the first switching sequence, a plurality of combinations of ON/OFF states of the plurality of bidirectional switches and an order of switching the plurality of combinations. The plurality of combinations of ON/OFF states of the plurality of bidirectional switches defined by the second switching sequence are fewer than the plurality of combinations of ON/OFF states of the plurality of bidirectional switches defined by the first switching sequence. An interval from a phase at which one of the first voltage, the second voltage, or the third voltage becomes zero to a phase separated from the phase by a predetermined angle is defined as a transition interval. A phase interval temporally contiguous with the transition interval is defined as a specific interval. The program causes the controller to, during the specific interval, control the plurality of bidirectional switches according to the first switching sequence, and during the transition interval, control the plurality of bidirectional switches according to the second switching sequence.

### Advantageous Effects of Invention

The possibility of electrical stress being applied to switching elements can be reduced.

### Brief Description of Drawings

[Fig. 1] Fig. 1 is a circuit diagram of a power conversion device.
[Fig. 2] Fig. 2 illustrates waveforms, sectors, and specific intervals for three-phase AC power.
[Fig. 3] Fig. 3 illustrates space vectors in SVPWM.
[Fig. 4] Fig. 4 illustrates space vectors in SVPWM.
[Fig. 5] Fig. 5 is a sequence diagram of switching control in a sector 1a.
[Fig. 6] Fig. 6 is a sequence diagram of switching control in a sector 1b.
[Fig. 7] Fig. 7 is a sequence diagram of switching control in a sector 1b'.
[Fig. 8] Fig. 8 is a sequence diagram of switching control in a sector 2a.
[Fig. 9] Fig. 9 is a sequence diagram of switching control in a sector 2a'.

### Description of Embodiments

### <Embodiment of Power Conversion Circuit>

An embodiment of a power conversion device will now be described. The drawings are intended to be merely illustrative of an embodiment of the present disclosure, rather than limiting of the present disclosure. Terms such as "first", "second", and "third" are used solely for the purpose of distinguishing objects or features from each other, and are not to be construed as indicating, for example, any relative order among such objects or features.

Although a plurality of electronic components or other objects may sometimes be collectively referred to by a single name denoting a circuit element, such a name is used merely for convenience in collectively referring to relevant objects. That is, the classification, names, and other aspects of circuit elements are not limited to those described herein. As used herein, the term "terminal" includes a so-called node, and simply means an electrical connection point.

### (1. Configuration of Power Conversion Device)

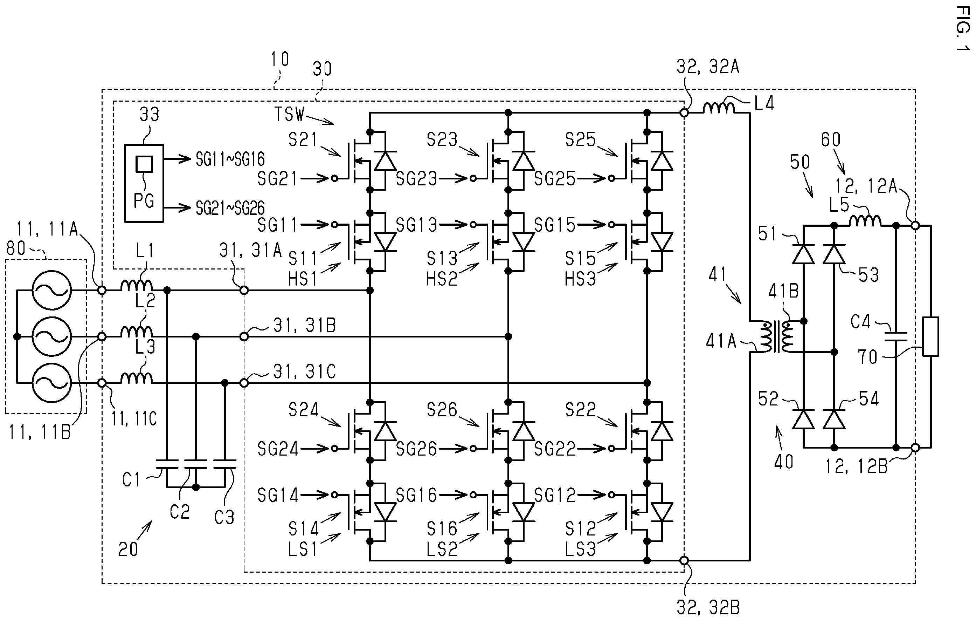

As illustrated in Fig. 1, a power conversion device 10 includes an input-side low pass filter 20, a power conversion circuit 30, a transformer circuit 40, a rectifier circuit 50, and an output-side low pass filter 60. The power conversion device 10 includes three external input terminals 11, and a pair of external output terminals 12.

The power conversion device 10 is a so-called three-phase isolated AC-DC converter. That is, the power conversion device 10 is configured to convert three-phase AC power input at the external input terminals 11 into DC power, and output the DC power from the external output terminals 12. Since the transformer circuit 40 is present in the path of power from the external input terminals 11 to the external output terminals 12, the external input terminals 11 and the external output terminals 12 are electrically isolated.

The three external input terminals 11 of the power conversion device 10 include a first external input terminal 11A, a second external input terminal 11B, and a third external input terminal 11C. The three phases of three-phase AC power input from a three-phase AC power source 80 are input in a one-to-one correspondence to the three external input terminals 11. The three-phase AC power source 80 is a three-phase, three-wire commercial power system with three AC power sources connected in a Y-configuration.

The pair of external output terminals 12 include a first external output terminal 12A and a second external output terminal 12B. A given load 70 can be connected between the first external output terminal 12A and the second external output terminal 12B. The load 70 is, for example, an electronic device that is driven with DC power.

The input-side low pass filter 20 includes a first inductor L1, a second inductor L2, and a third inductor L3. The input-side low pass filter 20 also includes a first capacitor C1, a second capacitor C2, and a third capacitor C3.

A first end of the first inductor L1 is connected to the first external input terminal 11A. A first end of the first capacitor C1 is connected to a second end of the first inductor L1.

A first end of the second inductor L2 is connected to the second external input terminal 11B. A first end of the second capacitor C2 is connected to a second end of the second inductor L2. A second end of the second capacitor C2 is connected to a second end of the first capacitor C1.

A first end of the third inductor L3 is connected to the third external input terminal 11C. A first end of the third capacitor C3 is connected to a second end of the third inductor L3. A second end of the third capacitor C3 is connected to the second end of the first capacitor C1.

The power conversion circuit 30 includes a plurality of input terminals 31, a pair of output terminals 32, a plurality of bidirectional switches TSW, and a controller 33.

The input terminals 31 include a first input terminal 31A, a second input terminal 31B, and a third input terminal 31C. The first input terminal 31A is connected with the second end of the first inductor L1. The second input terminal 31B is connected with the second end of the second inductor L2. The third input terminal 31C is connected with the second end of the third inductor L3. Accordingly, three-phase AC power is input to the three input terminals 31 of the power conversion circuit 30 via the external input terminals 11 and the input-side low pass filter 20. The pair of output terminals 32 include a first output terminal 32A and a second output terminal 32B. Single-phase AC power obtained through conversion by the bidirectional switches TSW is output from the pair of output terminals 32.

The bidirectional switches TSW each have two switching elements. Each switching element is an N-channel metal oxide semiconductor field effect transistor (MOSFET). Each switching element has a body diode. The two switching elements constituting each bidirectional switch TSW are connected in series such that the respective anode terminals of their body diodes are connected to each other. That is, the switching elements constituting each bidirectional switch TSW are connected to each other such that their respective body diodes are oriented in opposite directions. In other words, each bidirectional switch TSW has two switching elements with their respective source terminals connected to each other.

The bidirectional switches TSW include a first high-side bidirectional switch HS1, a first low-side bidirectional switch LS1, a second high-side bidirectional switch HS2, a second low-side bidirectional switch LS2, a third high-side bidirectional switch HS3, and a third low-side bidirectional switch LS3.

The first high-side bidirectional switch HS1 connects between the first input terminal 31A and the first output terminal 32A. Specifically, the first high-side bidirectional switch HS1 has an eleventh switching element S11 and a twenty-first switching element S21. The drain terminal of the eleventh switching element S11 is connected to the first input terminal 31A. The source terminal of the eleventh switching element S11 is connected to the source terminal of the twenty-first switching element S21. The drain terminal of the twenty-first switching element S21 is connected to the first output terminal 32A.

The first low-side bidirectional switch LS1 connects between the first input terminal 31A and the second output terminal 32B. Specifically, the first low-side bidirectional switch LS1 has a twenty-fourth switching element S24 and a fourteenth switching element S14. The drain terminal of the twenty-fourth switching element S24 is connected to the first input terminal 31A. The source terminal of the twenty-fourth switching element S24 is connected to the source terminal of the fourteenth switching element S14. The drain terminal of the fourteenth switching element S14 is connected to the second output terminal 32B.

The second high-side bidirectional switch HS2 connects between the second input terminal 31B and the first output terminal 32A. Specifically, the second high-side bidirectional switch HS2 has a thirteenth switching element S13 and a twenty-third switching element S23. The drain terminal of the thirteenth switching element S13 is connected to the second input terminal 31B. The source terminal of the thirteenth switching element S13 is connected to the source terminal of the twenty-third switching element S23. The drain terminal of the twenty-third switching element S23 is connected to the first output terminal 32A.

The second low-side bidirectional switch LS2 connects between the second input terminal 31B and the second output terminal 32B. Specifically, the second low-side bidirectional switch LS2 has a twenty-sixth switching element S26 and a sixteenth switching element S16. The drain terminal of the twenty-sixth switching element S26 is connected to the second input terminal 31B. The source terminal of the twenty-sixth switching element S26 is connected to the source terminal of the sixteenth switching element S16. The drain terminal of the sixteenth switching element S16 is connected to the second output terminal 32B.

The third high-side bidirectional switch HS3 connects between the third input terminal 31C and the first output terminal 32A. Specifically, the third high-side bidirectional switch HS3 has a fifteenth switching element S15 and a twenty-fifth switching element S25. The drain terminal of the fifteenth switching element S15 is connected to the third input terminal 31C. The source terminal of the fifteenth switching element S15 is connected to the source terminal of the twenty-fifth switching element S25. The drain terminal of the twenty-fifth switching element S25 is connected to the first output terminal 32A.

The third low-side bidirectional switch LS3 connects between the third input terminal 31C and the second output terminal 32B. Specifically, the third low-side bidirectional switch LS3 has a twenty-second switching element S22 and a twelfth switching element S12. The drain terminal of the twenty-second switching element S22 is connected to the third input terminal 31C. The source terminal of the twenty-second switching element S22 is connected to the source terminal of the twelfth switching element S12. The drain terminal of the twelfth switching element S12 is connected to the second output terminal 32B.

The controller 33 includes a memory and a processing unit (which are not illustrated). That is, the controller 33 is a microcontroller unit (MCU). The memory of the controller 33 stores a program PG to be executed by the processing unit.

Non-limiting examples of the processing unit include a central processing unit (CPU), a micro processing unit (MPU), a field programmable gate array (FPGA), a complex programmable logic device (CPLD), and an application specific integrated circuit (ASIC). Hereinafter, ON/OFF control performed by the processing unit of the controller 33 will be referred to simply as "control performed by the controller 33."

The processing unit of the controller 33 is configured to, by executing the program PG, control the bidirectional switches TSW according to a switching sequence described later. Specifically, the power conversion device 10 includes a gate driving circuit (not illustrated). The controller 33 is configured to cause a switching signal to be input to an input terminal of the gate driving circuit. The gate driving circuit is configured to, based on the switching signal, output a gate driving voltage to a gate terminal of each switching element. That is, the controller 33 is configured to control the ON/OFF of each switching element via the gate driving circuit. The switching signal includes eleventh to sixteenth switching signals SG11 to SG16, and twenty-first to twenty-sixth switching signals SG21 to SG26. The eleventh to sixteenth switching signals SG11 to SG16 respectively correspond one-to-one to the eleventh to sixteenth switching elements S11 to S16. The twenty-first to twenty-sixth switching signals SG21 to SG26 respectively correspond one-to-one to the twenty-first to twenty-sixth switching elements S21 to S26.

Each bidirectional switch TSW can assume four ON/OFF states depending on the combination of ON/OFF states of individual switching elements. This will now be described below with reference, by way of example, to the first high-side bidirectional switch HS1 and the first low-side bidirectional switch LS1.

The first state is bidirectionally ON. When the first high-side bidirectional switch HS1 is bidirectionally ON, the eleventh switching element S11 is ON, and the twenty-first switching element S21 is ON. When bidirectionally ON, the first high-side bidirectional switch HS1 allows current to flow from the first input terminal 31A to the first output terminal 32A, and also allows current to flow from the first output terminal 32A to the first input terminal 31A.

When the first low-side bidirectional switch LS1 is bidirectionally ON, the fourteenth switching element S14 is ON, and the twenty-fourth switching element S24 is ON. When bidirectionally ON, the first low-side bidirectional switch LS1 allows current to flow from the first input terminal 31A to the second output terminal 32B, and also allows current to flow from the second output terminal 32B to the first input terminal 31A.

The second state is ON in a positive direction. When the first high-side bidirectional switch HS1 is ON in the positive direction, the eleventh switching element S11 is ON, and the twenty-first switching element S21 is OFF. When ON in the positive direction, the first high-side bidirectional switch HS1 allows current to flow from the first input terminal 31A to the first output terminal 32A via the body diode of the twenty-first switching element S21. Meanwhile, the first high-side bidirectional switch HS1 does not allow current to flow from the first output terminal 32A to the first input terminal 31A.

When the first low-side bidirectional switch LS1 is ON in the positive direction, the fourteenth switching element S14 is ON, and the twenty-fourth switching element S24 is OFF. When ON in the positive direction, the first low-side bidirectional switch LS1 allows current to flow from the second output terminal 32B to the first input terminal 31A via the body diode of the twenty-fourth switching element S24. Meanwhile, the first low-side bidirectional switch LS1 does not allow current to flow from the first input terminal 31A to the second output terminal 32B.

The third state is ON in a negative direction. When the first high-side bidirectional switch HS1 is ON in the negative direction, the eleventh switching element S11 is OFF, and the twenty-first switching element S21 is ON. When ON in the negative direction, the first high-side bidirectional switch HS1 allows current to flow from the first output terminal 32A to the first input terminal 31A via the body diode of the eleventh switching element S11. Meanwhile, the first high-side bidirectional switch HS1 does not allow current to flow from the first input terminal 31A to the first output terminal 32A.

When the first low-side bidirectional switch LS1 is ON in the negative direction, the fourteenth switching element S14 is OFF, and the twenty-fourth switching element S24 is ON. When ON in the negative direction, the first low-side bidirectional switch LS1 allows current to flow from the first input terminal 31A to the second output terminal 32B via the body diode of the fourteenth switching element S14. Meanwhile, the first low-side bidirectional switch LS1 does not allow current to flow from the second output terminal 32B to the first input terminal 31A.

The fourth state is OFF. When the first high-side bidirectional switch HS1 is OFF, the eleventh switching element S11 is OFF, and the twenty-first switching element S21 is OFF. When OFF, the first high-side bidirectional switch HS1 neither allows current to flow from the first input terminal 31A to the first output terminal 32A, nor allows current to flow from the first output terminal 32A to the first input terminal 31A.

When the first low-side bidirectional switch LS1 is OFF, the fourteenth switching element S14 is OFF, and the twenty-fourth switching element S24 is OFF. When OFF, the first low-side bidirectional switch LS1 neither allows current to flow from the first input terminal 31A to the second output terminal 32B, nor allows current to flow from the second output terminal 32B to the first input terminal 31A.

The transformer circuit 40 includes a fourth inductor L4, and a transformer 41. The transformer 41 includes a primary winding 41A, and a secondary winding 41B. A first end of the fourth inductor L4 is connected to the first output terminal 32A of the power conversion circuit 30. A first end of the primary winding 41A is connected to a second end of the fourth inductor L4. A second end of the primary winding 41A is connected to the second output terminal 32B of the power conversion circuit 30. The secondary winding 41B is connected to the external output terminals 12 via the rectifier circuit 50 and the output-side low pass filter 60. The primary winding 41A and the secondary winding 41B are electrically isolated.

The rectifier circuit 50 is a full-wave rectifier circuit including four diodes. Specifically, the rectifier circuit 50 includes a first diode 51, a second diode 52, a third diode 53, and a fourth diode 54. The anode terminal of the first diode 51 is connected to a first end of the secondary winding 41B of the transformer 41. The cathode terminal of the first diode 51 is connected to the cathode terminal of the third diode 53. The anode terminal of the third diode 53 is connected to a second end of the secondary winding 41B and the cathode terminal of the fourth diode 54. The anode terminal of the fourth diode 54 is connected to the anode terminal of the second diode 52. The cathode terminal of the second diode 52 is connected to the first end of the secondary winding 41B and the anode terminal of the first diode 51.

The cathode terminal of the first diode 51 and the cathode terminal of the third diode 53 are connected to the first external output terminal 12A via the output-side low pass filter 60. The anode terminal of the second diode 52 and the anode terminal of the fourth diode 54 are connected to the second external output terminal 12B. Accordingly, the first diode 51 allows current to flow from the first end of the secondary winding 41B toward the first external output terminal 12A. The fourth diode 54 allows current to flow from the second external output terminal 12B to the second end of the secondary winding 41B. The third diode 53 allows current to flow from the second end of the secondary winding 41B toward the first external output terminal 12A. The second diode 52 allows current to flow from the second external output terminal 12B to the first end of the secondary winding 41B.

The output-side low pass filter 60 includes a fifth inductor L5, and a fourth capacitor C4. A first end of the fifth inductor L5 is connected to the cathode terminal of the first diode 51 and the cathode terminal of the third diode 53. A second end of the fifth inductor L5 is connected to the first external output terminal 12A. A first end of the fourth capacitor C4 is connected to the second end of the fifth inductor L5. A second end of the fourth capacitor C4 is connected to the second external output terminal 12B.

### (2. Definition of Sectors)

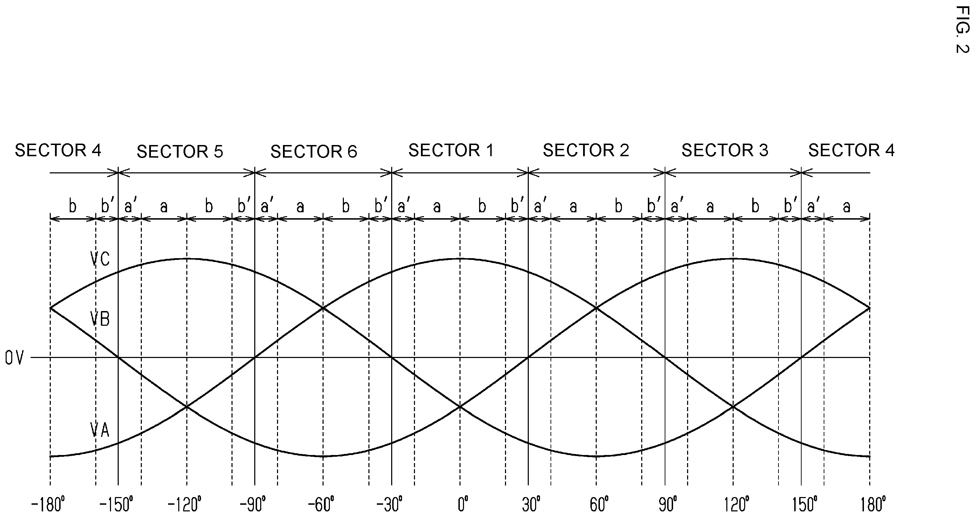

As described above, three-phase AC power is input from the three-phase AC power source 80 to the three input terminals 31 of the power conversion circuit 30 via the external input terminals 11 and the input-side low pass filter 20. As illustrated in Fig. 2, the voltages of the three phases of the three-phase AC power include a first voltage VA, a second voltage VB, and a third voltage VC, which are AC voltages of different phases. These voltages are input in a one-to-one correspondence to the first input terminal 31A, the second input terminal 31B, and the third input terminal 31C. Specifically, the first voltage VA is input to the first input terminal 31A. The second voltage VB is input to the second input terminal 31B. The third voltage VC is input to the third input terminal 31C. The second voltage VB has a phase difference of 120° with respect to the first voltage VA. The third voltage VC has a phase difference of 120° with respect to the second voltage VB. The "phase difference of 120°" allows for an error on the order of about ±1°.

Hereinafter, the phase at which the first voltage VA is at its maximum is defined as 0°. The phase at which the first voltage VA is at its minimum is defined as -180° and 180°. Accordingly, one period of each of the first voltage VA, the second voltage VB, and the third voltage VC is expressed in a phase range greater than or equal to -180° and less than 180°. For convenience, the phase of a voltage may also be expressed as a value greater than or equal to 180°. When the phase of a voltage is expressed as a value greater than or equal to 180°, X° is synonymous with (-180° + (X - 180°)). Now, the one period is divided into six equal intervals, which are herein defined as sectors 1 to 6. Specifically, when the phase of the first voltage VA is defined as "θ°", the sectors 1 to 6 are defined as the intervals of 60° as follows.
- Sector 1: -30° < θ° < 30°
- Sector 2: 30° < θ° < 90°
- Sector 3: 90° < θ° < 150°
- Sector 4: 150° < θ° < 180° and -180° < θ° < -150°
- Sector 5: -150° < θ° < -90°
- Sector 6: -90° < θ° < -30°

Further, each of the sectors 1 to 6 is subdivided into four intervals. In other words, one period of three-phase AC power is subdivided into 24 intervals. Hereinafter, n represents an integer greater than or equal to 1 and less than or equal to 6, and the value of n corresponds to a sector number. In this case, a sector n is subdivided into four intervals defined as a sector na', a sector na, a sector nb, and a sector nb'. According to the present embodiment, each interval is defined as follows. The value of the midpoint of the interval corresponding to the sector n is defined as X°. The term "the midpoint of the interval" refers to the value of the midpoint between the endpoints of each sector represented as a half-open interval. It is to be noted, however, that for the sector 4a and the sector 4a', X = 180°.
- Sector na': (X° - 30°) < θ° < (X° - 25°)
- Sector na: (X° - 25°) < θ° < X°
- Sector nb: X° < θ° < (X° + 25°)
- Sector nb': (X° + 25°) < θ° < (X° + 30°)

For example, for the sector 1, the value of X° is 0°. Accordingly, the sector 1a' is an interval of greater than or equal to -30° and less than -25°. The sector 1a is an interval of greater than or equal to -25° and less than 0°. The sector 1b is an interval greater than or equal to 0° and less than 25°. The sector 1b' is an interval of greater than or equal to 25° and less than 30°.

### (3. Vector Sequences)

Hereinafter, the difference in potential of the first output terminal 32A with respect to the second output terminal 32B is defined as a primary voltage Vp. That is, the primary voltage Vp is a voltage applied across the fourth inductor L4 and the primary winding 41A of the transformer 41. The current that flows between the first output terminal 32A and the second output terminal 32B is defined as a primary current Ip. That is, the primary current Ip is a current that flows through the fourth inductor L4 and the primary winding 41A of the transformer 41. The direction in which the primary current Ip flows from the first output terminal 32A to the second output terminal 32B is referred to as the positive direction. The direction in which the primary current Ip flows from the second output terminal 32B to the first output terminal 32A is referred to as the negative direction.

With regard to the three-phase AC power according to the present embodiment, the phase based on the first voltage VA is referred to as phase A, the phase based on the second voltage VB is referred to as phase B, and the phase based on the third voltage VC is referred to as phase C. Among the three phases, one phase is referred to as phase i, and a phase different from phase i is referred to as phase j. In this case, the difference obtained by subtracting the voltage of phase j from the voltage of phase i is referred to as "line-to-line voltage Vij."

The controller 33 is configured to control the pulse width of each switching signal through space vector pulse width modulation (SVPWM).

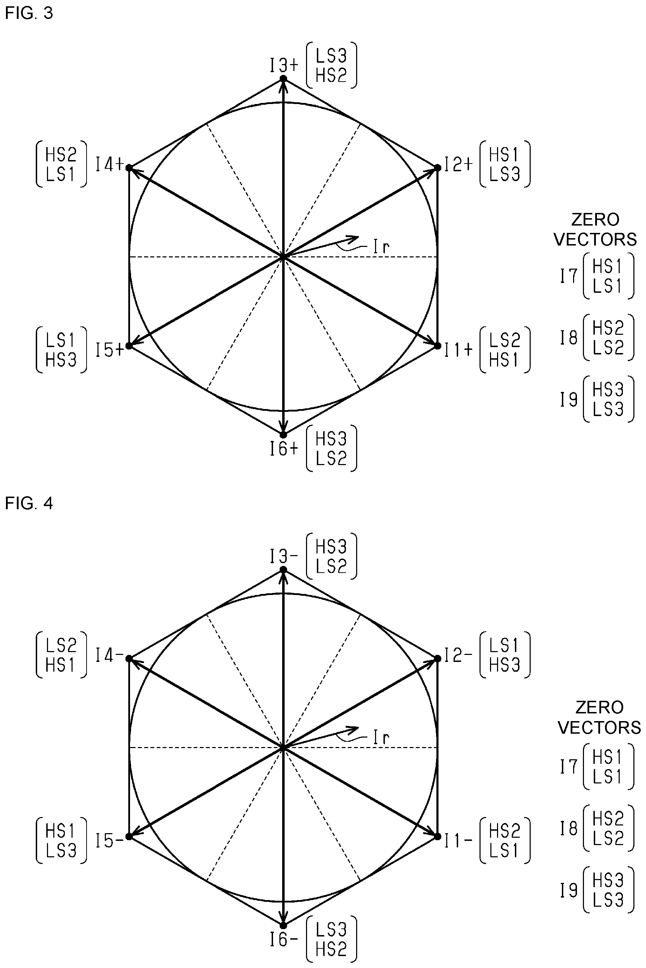

As illustrated in Figs. 3 and 4, active vectors and zero vectors Iz are defined in performing control by use of SVPWM. According to the present embodiment, active vectors and the zero vectors Iz are current vectors of the power conversion circuit 30 in a predetermined switching state. When m is an integer greater than or equal to 1 and less than or equal to 6, an active vector is represented as a space vector by the following equation denoted as Equation 1. It is to be noted, however, that in Equation 1, "I" is the absolute value of the primary current Ip. [Eq. 1] $\vec{{I}_{m}} = \frac{2}{\sqrt{3}} I ⋅ {e}^{j \left(\frac{mπ}{3}-\frac{π}{2}\right)}$

Active vectors are broadly divided into positive-direction active vectors and negative-direction active vectors.

Specifically, as illustrated in Fig. 3, the positive-direction active vectors include first to sixth positive-direction active vectors I1+ to I6+. The positive-direction active vectors are the current vectors when the primary voltage Vp has a positive value and the corresponding bidirectional switches TSW are in the following switching states.
- First positive-direction active vector I1+: The second low-side bidirectional switch LS2 is bidirectionally ON, or is ON in the positive direction. Further, the first high-side bidirectional switch HS1 is bidirectionally ON, or is ON in the positive direction. At this time, the primary voltage Vp is a line-to-line voltage VAB.
- Second positive-direction active vector I2+: The first high-side bidirectional switch HS1 is bidirectionally ON, or is ON in the positive direction. Further, the third low-side bidirectional switch LS3 is bidirectionally ON, or is ON in the positive direction. At this time, the primary voltage Vp is a line-to-line voltage VAC.
- Third positive-direction active vector I3+: The third low-side bidirectional switch LS3 is bidirectionally ON, or is ON in the positive direction. Further, the second high-side bidirectional switch HS2 is bidirectionally ON, or is ON in the positive direction. At this time, the primary voltage Vp is a line-to-line voltage VBC.
- Fourth positive-direction active vector I4+: The second high-side bidirectional switch HS2 is bidirectionally ON, or is ON in the positive direction. Further, the first low-side bidirectional switch LS1 is bidirectionally ON, or is ON in the positive direction. At this time, the primary voltage Vp is a line-to-line voltage VBA.
- Fifth positive-direction active vector I5+: The first low-side bidirectional switch LS1 is bidirectionally ON, or is ON in the positive direction. Further, the third high-side bidirectional switch HS3 is bidirectionally ON, or is ON in the positive direction. At this time, the primary voltage Vp is a line-to-line voltage VCA.
- Sixth positive-direction active vector I6+: The third high-side bidirectional switch HS3 is bidirectionally ON, or is ON in the positive direction. Further, the second low-side bidirectional switch LS2 is bidirectionally ON, or is ON in the positive direction. At this time, the primary voltage Vp is a line-to-line voltage VCB.

As illustrated in Fig. 4, the negative-direction active vectors include first to sixth negative-direction active vectors I1- to I6-. The negative-direction active vectors are the current vectors when the primary voltage Vp has a negative value and the corresponding bidirectional switches TSW are in the following switching states.
- First negative-direction active vector I1-: The second high-side bidirectional switch HS2 is bidirectionally ON, or is ON in the negative direction. Further, the first low-side bidirectional switch LS1 is bidirectionally ON, or is ON in the negative direction. At this time, the primary voltage Vp is a line-to-line voltage -VAB.
- Second negative-direction active vector I2-: The first low-side bidirectional switch LS1 is bidirectionally ON, or is ON in the negative direction. Further, the third high-side bidirectional switch HS3 is bidirectionally ON, or is ON in the negative direction. At this time, the primary voltage Vp is a line-to-line voltage -VAC.
- Third negative-direction active vector I3-: The third high-side bidirectional switch HS3 is bidirectionally ON, or is ON in the negative direction. Further, the second low-side bidirectional switch LS2 is bidirectionally ON, or is ON in the negative direction. At this time, the primary voltage Vp is a line-to-line voltage -VBC.
- Fourth negative-direction active vector I4-: The second low-side bidirectional switch LS2 is bidirectionally ON, or is ON in the negative direction. Further, the first high-side bidirectional switch HS1 is bidirectionally ON, or is ON in the negative direction. At this time, the primary voltage Vp is a line-to-line voltage -VBA.
- Fifth negative-direction active vector I5-: The first high-side bidirectional switch HS1 is bidirectionally ON, or is ON in the negative direction. Further, the third low-side bidirectional switch LS3 is bidirectionally ON, or is ON in the negative direction. At this time, the primary voltage Vp is a line-to-line voltage -VCA.
- Sixth negative-direction active vector I6-: The third low-side bidirectional switch LS3 is bidirectionally ON, or is ON in the negative direction. Further, the second high-side bidirectional switch HS2 is bidirectionally ON, or is ON in the negative direction. At this time, the primary voltage Vp is a line-to-line voltage -VCB.

As illustrated in Figs. 3 and 4, the zero vectors Iz include a seventh zero vector I7, an eighth zero vector I8, and a ninth zero vector I9. The zero vectors Iz are current vectors in the following switching states. In the switching states corresponding to the zero vectors Iz, the primary voltage Vp is zero. When it is stated herein that "the primary voltage Vp is zero", this allows for an error on the order of, for example, ±10 V.
- Seventh zero vector I7: The first high-side bidirectional switch HS1 is bidirectionally ON or is ON in the positive direction, and the first low-side bidirectional switch LS1 is bidirectionally ON or is ON in the positive direction. Alternatively, the first high-side bidirectional switch HS1 is bidirectionally ON or is ON in the negative direction, and the first low-side bidirectional switch LS1 is bidirectionally ON or is ON in the negative direction.
- Eighth zero vector I8: The second high-side bidirectional switch HS2 is bidirectionally ON or is ON in the positive direction, and the second low-side bidirectional switch LS2 is bidirectionally ON or is ON in the positive direction. Alternatively, the second high-side bidirectional switch HS2 is bidirectionally ON or is ON in the negative direction, and the second low-side bidirectional switch LS2 is bidirectionally ON or is ON in the negative direction.
- Ninth zero vector I9: The third high-side bidirectional switch HS3 is bidirectionally ON or is ON in the positive direction, and the third low-side bidirectional switch LS3 is bidirectionally ON or is ON in the positive direction. Alternatively, the third high-side bidirectional switch HS3 is bidirectionally ON or is ON in the negative direction, and the third low-side bidirectional switch LS3 is bidirectionally ON or is ON in the negative direction.

A reference vector Ir for current in the sector n is approximated as the resultant vector of the active vectors and the zero vector Iz mentioned above. Specifically, when x = n and y = x + 1 (however, y = 1 when x = 6), the reference vector Ir for current in the sector n is approximated as the resultant vector of the x-th positive-direction active vector Ix+, the y-th positive-direction active vector Iy+, and the zero vector Iz. Alternatively, the reference vector Ir for current in the sector n is approximated as the resultant vector of the x-th negative-direction active vector Ix-, the y-th negative-direction active vector Iy-, and the zero vector Iz. The zero vector Iz is the seventh zero vector I7 in the sectors 1 and 4. The zero vector Iz is the ninth zero vector I9 in the sectors 2 and 5. The zero vector Iz is the eighth zero vector I8 in the sectors 3 and 6.

The controller 33 is configured to, in principle, control the ON/OFF of the bidirectional switches TSW according to the magnitude relationship between the first voltage VA, the second voltage VB, and the third voltage VC, such that the reference vector Ir transitions between the active vectors and the zero vector Iz in a predetermined order.

Specifically, in the sector na, the controller 33 controls the ON/OFF of the bidirectional switches TSW such that the reference vector Ir follows the vector sequence described in (na) below. In the sector nb, the controller 33 controls the ON/OFF of the bidirectional switches TSW such that the reference vector Ir follows the vector sequence described in (nb) below.
(na) The x-th positive-direction active vector Ix+, the y-th positive-direction active vector Iy+, the zero vector Iz, the x-th negative-direction active vector Ix-, the y-th negative-direction active vector Iy-, and the zero vector Iz.
(nb) The y-th positive-direction active vector Iy+, the x-th positive-direction active vector Ix+, the zero vector Iz, the y-th negative-direction active vector Iy-, the x-th negative-direction active vector Ix-, and the zero vector Iz.

In the sector na', the controller 33 controls the ON/OFF of the bidirectional switches TSW such that the reference vector Ir follows the vector sequence described in (na') below. In the sector nb', the controller 33 controls the ON/OFF of the bidirectional switches TSW such that the reference vector Ir follows the vector sequence described in (nb') below.
(na') The x-th positive-direction active vector Ix+, the zero vector Iz, the x-th negative-direction active vector Ix-, and the zero vector Iz.
(nb') The y-th positive-direction active vector Iy+, the zero vector Iz, the y-th negative-direction active vector Iy-, and the zero vector Iz.

In principle, in the sector na, the controller 33 repeats, with a predetermined period Ts, the ON/OFF control of the bidirectional switches TSW based on the vector sequence described above in (na). In principle, in the sector nb, the controller 33 repeats, with the predetermined period Ts, the ON/OFF control of the bidirectional switches TSW based on the vector sequence described above in (nb). In principle, in the sector na', the controller 33 repeats, with the predetermined period Ts, the ON/OFF control of the bidirectional switches TSW based on the vector sequence described above in (na'). In principle, in the sector nb', the controller 33 repeats, with the predetermined period Ts, the ON/OFF control of the bidirectional switches TSW based on the vector sequence described above in (nb'). The period Ts is very short relative to the interval corresponding to each sector.

### (4. Switching Sequences)

The memory of the controller 33 stores a plurality of switching sequences as part of the program PG. Each switching sequence defines how the ON/OFF states of the bidirectional switches TSW are switched based on the corresponding vector sequence. Specifically, each switching sequence defines a plurality of combinations of ON/OFF states of the bidirectional switches TSW and the order of switching these combinations.

Hereinafter, one selected from the group consisting of the first voltage VA, the second voltage VB, and the third voltage VC is referred to as a specific voltage. The interval from the phase at which one of the first voltage VA, the second voltage VB, or the third voltage VC becomes zero to a phase separated from the phase by a predetermined angle is referred to as a transition interval. A phase interval temporally contiguous with the transition interval is referred to as a specific interval. According to the present embodiment, the "predetermined angle" is greater than 0° and less than or equal to 5°. Specifically, the predetermined angle is 5°.

The transition interval mentioned above includes a first transition interval, which is defined as an interval from the phase at which the input voltage becomes zero to a phase temporally preceding the phase and separated from the phase by the predetermined angle. The transition interval includes a second transition interval, which is defined as an interval from the phase at which the input voltage becomes zero to a phase temporally following the phase and separated from the phase by the predetermined angle. The specific interval includes a first specific interval, which is defined as an interval temporally preceding and contiguous with the first transition interval. The specific interval includes a second specific interval, which is defined as an interval temporally following and contiguous with the second transition interval.

For example, the second voltage VB becomes zero at the phase of 30°. That is, the specific voltage at this phase is the second voltage VB. The sector 1b' is an interval from the phase of 30° to the phase of 25°, which precedes and is separated from the phase of 30° by 5°. Thus, the sector 1b' is the first transition interval for the second voltage VB. The sector 1b is a phase interval temporally preceding and contiguous with the sector 1b'. Thus, the sector 1b is the first specific interval for the second voltage VB. The sector 2a' is an interval from the phase of 30° to the phase of 35°, which follows and is separated from the phase of 30° by 5°. Thus, the sector 2a' is the second transition interval for the second voltage VB. The sector 2a is a phase interval temporally following and contiguous with the sector 2a'. Thus, the sector 2a is the second specific interval for the second voltage VB.

Likewise, for other phases at which the input voltage becomes zero, the transition and specific intervals are defined as described below.

At the phase of 90°, the first voltage VA becomes zero. That is, when the first voltage VA is a specific voltage, the sector 2b' is the first transition interval for the first voltage VA. The sector 3a' is the second transition interval for the first voltage VA. The sector 2b is the first specific interval for the first voltage VA. The sector 3a is the second specific interval for the first voltage VA.

At the phase of 150°, the third voltage VC becomes zero. That is, when the third voltage VC is a specific voltage, the sector 3b' is the first transition interval for the third voltage VC. The sector 4a' is the second transition interval for the third voltage VC. The sector 3b is the first specific interval for the third voltage VC. The sector 4a is the second specific interval for the third voltage VC.

At the phase of -150°, the second voltage VB becomes zero. That is, when the second voltage VB is a specific voltage, the sector 4b' is the first transition interval for the second voltage VB. The sector 5a' is the second transition interval for the second voltage VB. The sector 4b is the first specific interval for the second voltage VB. The sector 5a is the second specific interval for the second voltage VB.

At the phase of -90°, the first voltage VA becomes zero. That is, when the first voltage VA is a specific voltage, the sector 5b' is the first transition interval for the first voltage VA. The sector 6a' is the second transition interval for the first voltage VA. The sector 5b is the first specific interval for the first voltage VA. The sector 6a is the second specific interval for the first voltage VA.

At the phase of -30°, the third voltage VC becomes zero. That is, when the third voltage VC is a specific voltage, the sector 6b' is the first transition interval for the third voltage VC. The sector 1a' is the second transition interval for the third voltage VC. The sector 6b is the first specific interval for the third voltage VC. The sector 1a is the second specific interval for the third voltage VC.

The controller 33 is configured to, during the first specific interval, control the bidirectional switches TSW according to a first switching sequence. The controller 33 is configured to, during the first transition interval, control the bidirectional switches TSW according to a second switching sequence. The controller 33 is configured to, during the second transition interval, control the bidirectional switches TSW according to a third switching sequence. The controller 33 is configured to, during the second specific interval, control the bidirectional switches TSW according to a fourth switching sequence. In each of the first switching sequence, the second switching sequence, the third switching sequence, and the fourth switching sequence, the ON/OFF states of individual bidirectional switches TSW are defined in a different manner.

In this regard, the combinations of ON/OFF states of the bidirectional switches TSW defined by each of the second switching sequence and the third switching sequence are fewer than the combinations of ON/OFF states of the bidirectional switches TSW defined by the first switching sequence. Further, the combinations of ON/OFF states of the bidirectional switches TSW defined by each of the second switching sequence and the third switching sequence are fewer than the combinations of ON/OFF states of the bidirectional switches TSW defined by the fourth switching sequence.

Specifically, among the first input terminal 31A, the second input terminal 31B, and the third input terminal 31C, the input terminal 31 that receives input of a specific voltage is defined as a first specific input terminal. Among the first input terminal 31A, the second input terminal 31B, and the third input terminal 31C, an input terminal other than the first specific input terminal is defined as a second specific input terminal. Among the first input terminal 31A, the second input terminal 31B, and the third input terminal 31C, the input terminal 31 other than the first specific input terminal and the second specific input terminal is defined as a third specific input terminal.

Further, the bidirectional switch TSW connecting between the first specific input terminal and the first output terminal 32A is defined as a first specific high-side bidirectional switch, and the bidirectional switch TSW connecting between the first specific input terminal and the second output terminal 32B is defined as a first specific low-side bidirectional switch. The bidirectional switch TSW connecting between the second specific input terminal and the first output terminal 32A is defined as a second specific high-side bidirectional switch, and the bidirectional switch TSW connecting between the second specific input terminal and the second output terminal 32B is defined as a second specific low-side bidirectional switch. The bidirectional switch TSW connecting between the third specific input terminal and the first output terminal 32A is defined as a third specific high-side bidirectional switch, and the bidirectional switch TSW connecting between the third specific input terminal and the second output terminal 32B is defined as a third specific low-side bidirectional switch.

At this time, the controller 33 is configured to, during a transition interval, cause the first specific high-side bidirectional switch and the first specific low-side bidirectional switch to be maintained OFF. A plurality of combinations of the respective ON/OFF states of the second specific high-side bidirectional switch, the second specific low-side bidirectional switch, the third specific high-side bidirectional switch, and the third specific low-side bidirectional switch, and the order of switching the plurality of combinations, as defined by the first switching sequence, are identical to a plurality of combinations of the respective ON/OFF states of the second specific high-side bidirectional switch, the second specific low-side bidirectional switch, the third specific high-side bidirectional switch, and the third specific low-side bidirectional switch, and the order of switching the plurality of combinations, as defined by the second switching sequence.

The following describes, by way of specific example, how the ON/OFF of the bidirectional switches TSW is controlled in each of the sectors 1a, 1b, 1b', 2a' and 2a according to the corresponding switching sequence.

Hereinafter, the switching sequence in the sector na will be referred to as a switching sequence na. The switching sequence in the sector nb will be referred to as a switching sequence nb. The switching sequence in the sector na' will be referred to as a switching sequence na'. The switching sequence in the sector nb' will be referred to as a switching sequence nb'. In this example, the first switching sequence is the switching sequence 1b. The second switching sequence is the switching sequence 1b'. The third switching sequence is the switching sequence 2a'. The fourth switching sequence is the switching sequence 2a.

In this example, the specific voltage is the second voltage VB. Thus, the first specific input terminal is the second input terminal. The second specific input terminal is one of the first and third input terminals 31A and 31C. The third specific input terminal is one of the first and third input terminals 31A and 31C that is not the second specific input terminal. According to the present embodiment, the second specific input terminal is the first input terminal 31A. The third specific input terminal is the third input terminal 31C.

In this example, the first specific high-side bidirectional switch is the second high-side bidirectional switch HS2. The first specific low-side bidirectional switch is the second low-side bidirectional switch LS2. The second specific high-side bidirectional switch is the first high-side bidirectional switch HS1. The second specific low-side bidirectional switch is the first low-side bidirectional switch LS1. The third specific high-side bidirectional switch is the third high-side bidirectional switch HS3. The third specific low-side bidirectional switch is the third low-side bidirectional switch LS3.

### (4-1. Switch Sequence 1a)

As illustrated in Fig. 2, in the sector 1a, of the first to third voltages VA to VC, the first voltage VA is the largest. Further, the third voltage VC is equal to or greater than the second voltage VB. In the sector 1a, the absolute value of the first voltage VA is the greatest. Further, the absolute value of the second voltage VB is greater than the absolute value of the third voltage VC.

As illustrated in Figs. 3 and 4, in the sector 1a, the controller 33 controls, in principle, the ON/OFF of the bidirectional switches TSW such that the reference vector Ir follows the vector sequence described in (1a) below. Accordingly, the switching sequence 1a is defined based on the vector sequence described in (1a) below.

(1a) The first positive-direction active vector I1+, the second positive-direction active vector I2+, the seventh zero vector I7, the first negative-direction active vector I1-, the second negative-direction active vector I2-, and the seventh zero vector I7.

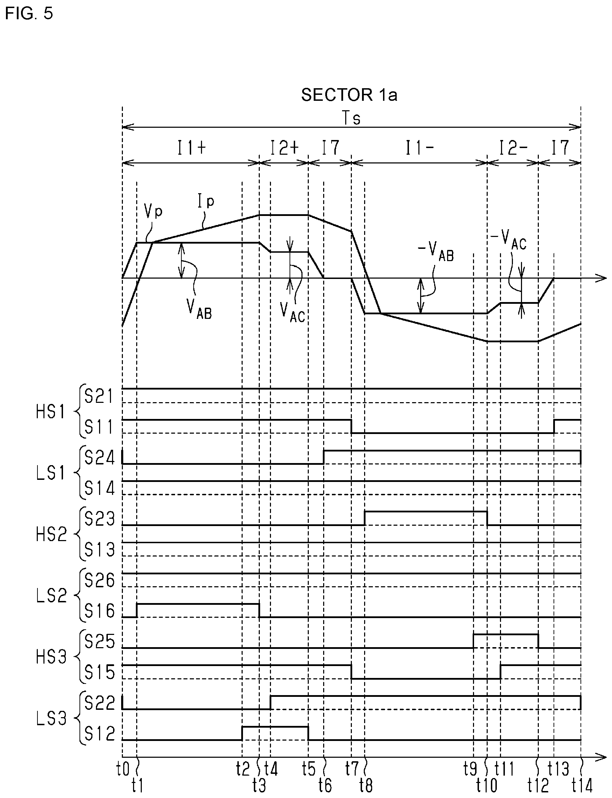

The switching sequence 1a within one period Ts in the sector 1a will now be described. As illustrated in Fig. 5, the one period Ts spans from time t0 to time t14. Time t0 coincides with time t14 in the immediately preceding period Ts. Accordingly, the state immediately before time t0 coincides with the state at time t13 in the immediately preceding period Ts. At this time, the first high-side bidirectional switch HS1 is bidirectionally ON. Further, the first low-side bidirectional switch LS1 is bidirectionally ON. The second high-side bidirectional switch HS2 is ON in the positive direction. The second low-side bidirectional switch LS2 is ON in the negative direction. The third high-side bidirectional switch HS3 is ON in the positive direction. The third low-side bidirectional switch LS3 is ON in the negative direction. In the state immediately before time t0, the primary voltage Vp is substantially zero.

At time t0 in the sector 1a, in other words, at time t14 in the immediately preceding period Ts, the controller 33 controls the first low-side bidirectional switch LS1 to be ON in the positive direction. Further, at time t0, the controller 33 controls the third low-side bidirectional switch LS3 to be OFF.

The controller 33 controls the ON/OFF of individual switching elements such that, at time t3, the reference vector Ir transitions to the second positive-direction active vector I2+. During the interval from time t0 to time t3, the controller 33 controls individual switching elements such that the first positive-direction active vector I1+ is created.

Specifically, at time t1, the controller 33 controls the second low-side bidirectional switch LS2 to be bidirectionally ON. Subsequently, at time t2, the controller 33 controls the third low-side bidirectional switch LS3 to be ON in the positive direction. At time t3, the controller 33 controls the second low-side bidirectional switch LS2 to be ON in the negative direction. From time t0 to time t1, the primary voltage Vp increases from zero to the line-to-line voltage VAB. During the interval from time t1 to time t3, the primary voltage Vp remains substantially constant at the line-to-line voltage VAB.

Subsequently, the controller 33 controls the ON/OFF of individual switching elements such that, at time t5, the reference vector Ir transitions to the seventh zero vector I7.

Specifically, at time t4, the controller 33 controls the third low-side bidirectional switch LS3 to be bidirectionally ON. At time t5, the controller 33 controls the third low-side bidirectional switch LS3 to be ON in the negative direction. From time t3 to time t4, the primary voltage Vp decreases from the line-to-line voltage VAB to the line-to-line voltage VAC. During the interval from time t4 to time t5, the primary voltage Vp remains substantially constant at the line-to-line voltage VAC.

Subsequently, the controller 33 controls the ON/OFF of individual switching elements such that, at time t7, the reference vector Ir transitions to the first negative-direction active vector I1-.

Specifically, at time t6, the controller 33 controls the first low-side bidirectional switch LS1 to be bidirectionally ON. At time t7, the controller 33 controls the first high-side bidirectional switch HS1 to be ON in the negative direction. Further, at time t7, the controller 33 controls the third high-side bidirectional switch HS3 to be OFF. From time t5 to time t6, the primary voltage Vp decreases from the line-to-line voltage VAC to zero. During the interval from time t6 to time t7, the primary voltage Vp remains substantially zero.

Subsequently, the controller 33 controls the ON/OFF of individual switching elements such that, at time t10, the reference vector Ir transitions to the second negative-direction active vector I2-.

Specifically, at time t8, the controller 33 controls the second high-side bidirectional switch HS2 to be bidirectionally ON. At time t9, the controller 33 controls the third high-side bidirectional switch HS3 to be ON in the negative direction. At time t10, the controller 33 controls the second high-side bidirectional switch HS2 to be ON in the positive direction.

From time t7 to time t8, the primary voltage Vp decreases from zero to the line-to-line voltage VBA. During the interval from time t8 to time t10, the primary voltage Vp remains substantially constant at the line-to-line voltage VBA. For convenience, the line-to-line voltage Vij is denoted as "-Vji" in Figs. 5 to 7.

Subsequently, as illustrated in Fig. 5, the controller 33 controls the ON/OFF of individual switching elements such that, at time t12, the reference vector Ir transitions to the seventh zero vector I7.

Specifically, at time t11, the controller 33 controls the third high-side bidirectional switch HS3 to be bidirectionally ON. At time t12, the controller 33 controls the third high-side bidirectional switch HS3 to be ON in the positive direction. From time t10 to time t11, the primary voltage Vp increases from the line-to-line voltage VBA to the line-to-line voltage VCA. During the interval from time t11 to time t12, the primary voltage Vp remains substantially constant at the line-to-line voltage VCA.

As described above, the state at time t14 coincides with the ON/OFF state of individual switching elements at time t0. That is, during the interval from time t12 to time t14, the controller 33 controls the ON/OFF of individual switching elements such that, at time t0 in the next period Ts, the reference vector Ir transitions to the first positive-direction active vector I1+. That is, during the interval from time t12 to time t14, the controller 33 controls individual switching elements such that the seventh zero vector I7 is created.

Specifically, at time t13, the controller 33 controls the first high-side bidirectional switch HS1 to be bidirectionally ON. At time t14, the controller 33 controls the first low-side bidirectional switch LS1 to be ON in the positive direction. Further, the controller 33 controls the third low-side bidirectional switch LS3 to be OFF. One period Ts ends once the switches are switched at time t14.

From time t12 to time t13, the primary voltage Vp increases from the line-to-line voltage VCA to zero. During the interval from time t13 to time t14, the primary voltage Vp remains zero.

Each sector differs in aspects such as the specific duration of the interval between time t0 and time t3, and the proportion of one period Ts occupied by this interval. This is true also for other intervals including the interval between time t3 and time t5, the interval between time t5 and time t7, the interval between time t7 and time t10, the interval between time t10 and time t12, and the interval between time t12 and time t14.

### (4-2. Switching Sequence 1b)

As illustrated in Fig. 2, in the sector 1b, of the first to third voltages VA to VC, the first voltage VA is the greatest. Further, the second voltage VB is greater than or equal to the third voltage VC. In the sector 1b, the absolute value of the first voltage VA is the greatest. Further, the absolute value of the third voltage VC is greater than the absolute value of the second voltage VB.

As illustrated in Figs. 3 and 4, in the sector 1b, the controller 33 controls, in principle, the ON/OFF of the bidirectional switches TSW such that the reference vector Ir follows the vector sequence described in (1b) below. Accordingly, the switching sequence 1b is defined based on the vector sequence described in (1b) below.

(1b) The second positive-direction active vector I2+, the first positive-direction active vector I1+, the seventh zero vector I7, the second negative-direction active vector I2-, the first negative-direction active vector I1-, and the seventh zero vector I7.

Accordingly, the pattern of ON/OFF control performed by the controller 33 according to the switching sequence 1b is as described below based on, for example, the magnitude relationship between individual voltages and the vector sequence.

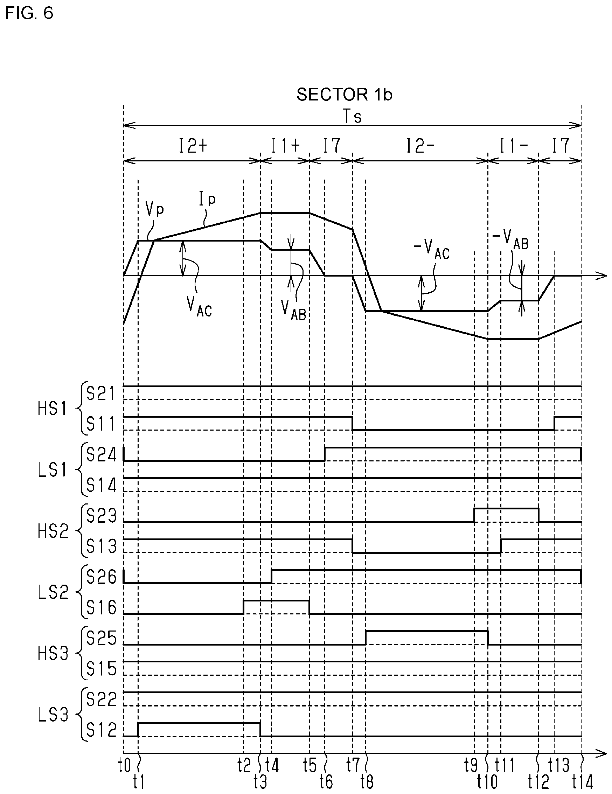

As illustrated in Figs. 5 and 6, the pattern of ON/OFF control of the first high-side bidirectional switch HS1 in the sector 1b performed by the controller 33 is the same as the pattern of ON/OFF control of the first high-side bidirectional switch HS1 in the sector 1a. The pattern of ON/OFF control of the first low-side bidirectional switch LS1 in the sector 1b is the same as the pattern of ON/OFF control of the first low-side bidirectional switch LS1 in the sector 1a.

The pattern of ON/OFF control of the second high-side bidirectional switch HS2 in the sector 1b is the same as the pattern of ON/OFF control of the third high-side bidirectional switch HS3 in the sector 1a. The pattern of ON/OFF control of the second low-side bidirectional switch LS2 in the sector 1b is the same as the pattern of ON/OFF control of the third low-side bidirectional switch LS3 in the sector 1a.

The pattern of ON/OFF control of the third high-side bidirectional switch HS3 in the sector 1b is the same as the pattern of ON/OFF control of the second high-side bidirectional switch HS2 in the sector 1a. The pattern of ON/OFF control of the third low-side bidirectional switch LS3 in the sector 1b is the same as the pattern of ON/OFF control of the second low-side bidirectional switch LS2 in the sector 1a. Therefore, the switching sequence 1b for the sector 1b defines fourteen combinations of ON/OFF states of the bidirectional switches TSW.

### (4-3. Switching Sequence 1b')

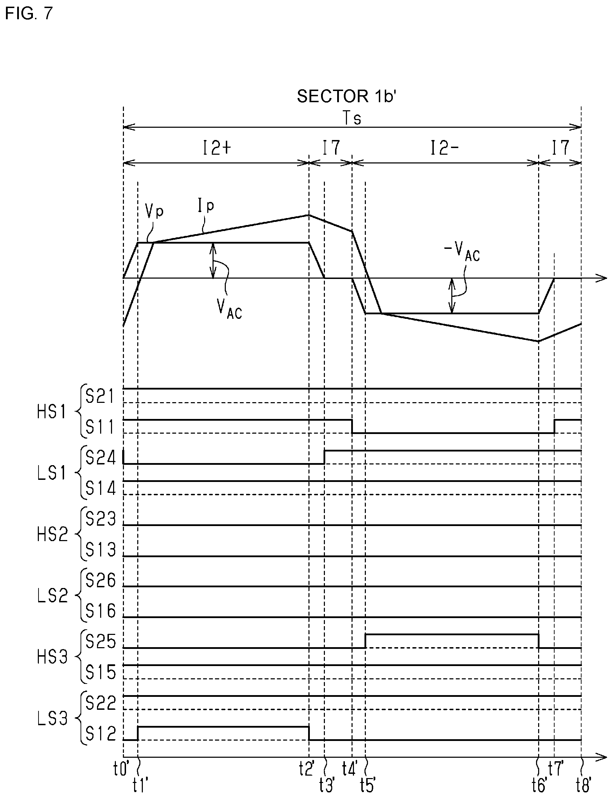

The switching pattern in the sector 1b' will now be described. As illustrated in Figs. 6 and 7, the ON/OFF control performed by the controller 33 in the sector 1b' is identical or similar to the ON/OFF control performed in the sector 1b, except for how the second low-side bidirectional switch LS2 and the second high-side bidirectional switch HS2 are controlled.

Specifically, in the sector 1b', the controller 33 maintains the second low-side bidirectional switch LS2 and the second high-side bidirectional switch HS2 in the OFF state at all times. Accordingly, in the sector 1b', the controller 33 controls the ON/OFF of the bidirectional switches TSW such that the reference vector Ir follows the vector sequence described in (1b') below.

(1b') The second positive-direction active vector I2+, the seventh zero vector I7, the second negative-direction active vector I2-, and the seventh zero vector I7.

More specifically, as illustrated in Fig. 7, in the sector 1b', the controller 33 controls individual bidirectional switches TSW as described below.

One period Ts of the sector 1b' spans from time t0' to time t8'. Time t0', however, coincides with time t8' in the immediately preceding period Ts. At this time, the first high-side bidirectional switch HS1 is bidirectionally ON. The first low-side bidirectional switch LS1 is bidirectionally ON. The second high-side bidirectional switch HS2 is OFF. The second low-side bidirectional switch LS2 is OFF. The third high-side bidirectional switch HS3 is ON in the positive direction. The third low-side bidirectional switch LS3 is ON in the negative direction. In the state immediately before time t0', the primary voltage Vp is substantially zero.

The controller 33 controls the ON/OFF of individual switching elements such that, at time t2', the reference vector Ir transitions to the seventh zero vector I7. During the interval from time t0' to time t2', the controller 33 controls individual switching elements such that the second positive-direction active vector I2+ is created.

Specifically, at time t0' in the sector 1b', in other words, at time t8' in the immediately preceding period Ts, the controller 33 controls the first low-side bidirectional switch LS1 to be ON in the positive direction. At time t1', the controller 33 controls the third low-side bidirectional switch LS3 to be bidirectionally ON. At time t2', the controller 33 controls the third low-side bidirectional switch LS3 to be ON in the negative direction. From time t0' to time t1', the primary voltage Vp increases from zero to the line-to-line voltage VAC. During the interval from time t1' to time t3', the primary voltage Vp remains substantially constant at the line-to-line voltage VAC.

Subsequently, the controller 33 controls the ON/OFF of individual switching elements such that, at time t4', the reference vector Ir transitions to the second negative-direction active vector I2-.

Specifically, at time t3', the controller 33 controls the first low-side bidirectional switch LS1 to be bidirectionally ON. At time t4', the controller 33 controls the first high-side bidirectional switch HS1 to be ON in the negative direction. From time t2' to time t3', the primary voltage Vp decreases from the line-to-line voltage VAC to zero. During the interval from time t3' to time t4', the primary voltage Vp remains substantially zero.

Subsequently, the controller 33 controls the ON/OFF of individual switching elements such that, at time t6', the reference vector Ir transitions to the seventh zero vector I7.

Specifically, at time t5', the controller 33 controls the third high-side bidirectional switch HS3 to be bidirectionally ON. At time t6', the controller 33 controls the third high-side bidirectional switch HS3 to be ON in the positive direction. From time t4' to time t5', the primary voltage Vp decreases from zero to the line-to-line voltage VCA. During the interval from time t5' to time t6', the primary voltage Vp remains substantially constant at the line-to-line voltage VCA.

As described above, the state at time t8' coincides with the ON/OFF state of individual switching elements at time t0'. That is, during the interval from time t6' to time t8', the controller 33 controls the ON/OFF of individual switching elements such that, at time t0' in the next period Ts, the reference vector Ir transitions to the second positive-direction active vector I2+. That is, during the interval from time t6' to time t8', the controller 33 controls individual switching elements such that the seventh zero vector I7 is created.

Specifically, at time t7', the controller 33 controls the first high-side bidirectional switch HS1 to be bidirectionally ON. At time t8', that is, at time t0' in the next period Ts, the controller 33 controls the first low-side bidirectional switch LS1 to be ON in the positive direction. One period Ts ends once the switches are switched at time t8'. From time t6' to time t7', the primary voltage Vp increases from the line-to-line voltage VCA to zero. During the interval from time t7' to time t8', the primary voltage Vp remains substantially zero.

As described above, the switching sequence 1b' for the sector 1b' defines eight combinations of ON/OFF states of the bidirectional switches TSW. Therefore, the combinations defined by the switching sequence 1b' are fewer than the combinations defined by the switching sequence 1b.

### (4-4. Switching Sequence 2a)

As illustrated in Fig. 2, in the sector 2a, of the first to third voltages VA to VC, the first voltage VA is the greatest. Further, the second voltage VB is greater than or equal to the third voltage VC. In the sector 2a, the absolute value of the third voltage VC is the greatest. Further, the absolute value of the first voltage VA is greater than the absolute value of the second voltage VB.

As illustrated in Figs. 3 and 4, in the sector 2a, the controller 33 controls, in principle, the ON/OFF of the bidirectional switches TSW such that the reference vector Ir follows the vector sequence described in (2a) below. Accordingly, the switching sequence 2a is defined based on the vector sequence described in (2a) below.

(2a) The second positive-direction active vector I2+, the third positive-direction active vector I3+, the ninth zero vector I9, the second negative-direction active vector I2-, the third negative-direction active vector I3-, and the ninth zero vector I9.

Accordingly, the pattern of ON/OFF control performed by the controller 33 according to the switching sequence 2a is as described below based on, for example, the magnitude relationship between individual voltages and the vector sequence.

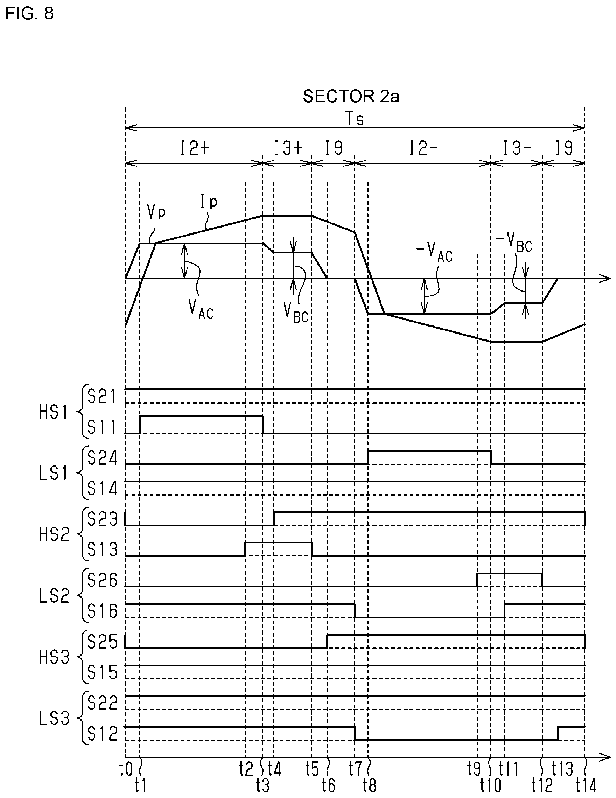

As illustrated in Figs. 5 and 8, the pattern of ON/OFF control of the first high-side bidirectional switch HS1 in the sector 2a performed by the controller 33 is the same as the pattern of ON/OFF control of the second low-side bidirectional switch LS2 in the sector 1a. The pattern of ON/OFF control of the first low-side bidirectional switch LS1 in the sector 2a is the same as the pattern of ON/OFF control of the second high-side bidirectional switch HS2 in the sector 1a.

The pattern of ON/OFF control of the second high-side bidirectional switch HS2 in the sector 2a is the same as the pattern of ON/OFF control of the third low-side bidirectional switch LS3 in the sector 1a. The pattern of ON/OFF control of the second low-side bidirectional switch LS2 in the sector 2a is the same as the pattern of ON/OFF control of the third high-side bidirectional switch HS3 in the sector 1a.

The pattern of ON/OFF control of the third high-side bidirectional switch HS3 in the sector 2a is the same as the pattern of ON/OFF control of the first low-side bidirectional switch LS1 in the sector 1a. The pattern of ON/OFF control of the third low-side bidirectional switch LS3 in the sector 2a is the same as the pattern of ON/OFF control of the first high-side bidirectional switch HS1 in the sector 1a. Therefore, the switching sequence 1b for the sector 1b defines fourteen combinations of ON/OFF states of the bidirectional switches TSW.

### (4-5. Switching Sequence 2a')

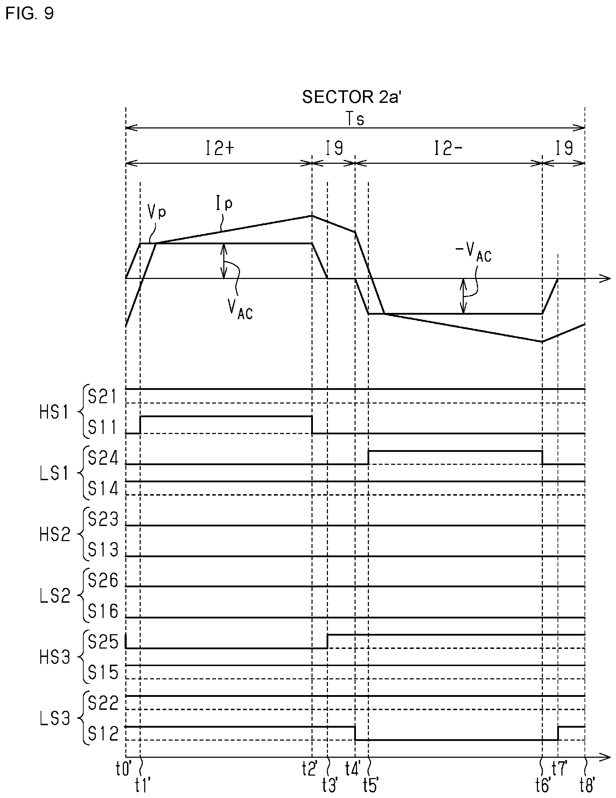

The switching pattern in the sector 2a' will now be described. As illustrated in Figs. 8 and 9, the ON/OFF control performed by the controller 33 in the sector 2a' is identical or similar to the ON/OFF control performed in the sector 2a, except for how the second low-side bidirectional switch LS2 and the second high-side bidirectional switch HS2 are controlled.

Specifically, in the sector 2a', the controller 33 maintains the second low-side bidirectional switch LS2 and the second high-side bidirectional switch HS2 in the OFF state at all times. Accordingly, in the sector 2a', the controller 33 controls the ON/OFF of the bidirectional switches TSW such that the reference vector Ir follows the vector sequence described in (2a') below.

(2a') The second positive-direction active vector I2+, the ninth zero vector I9, the second negative-direction active vector I2-, and the ninth zero vector I9.

Accordingly, the pattern of ON/OFF control performed by the controller 33 according to the switching sequence 2a' is as follows based on, for example, the magnitude relationship between individual voltages and the vector sequence.

As illustrated in Figs. 7 and 9, the pattern of ON/OFF control of the first high-side bidirectional switch HS1 in the sector 2a' performed by the controller 33 is the same as the pattern of ON/OFF control of the third low-side bidirectional switch LS3 in the sector 1b'. The pattern of ON/OFF control of the first low-side bidirectional switch LS1 in the sector 2a' is the same as the pattern of ON/OFF control of the third high-side bidirectional switch HS3 in the sector 1b'.

The pattern of ON/OFF control of each of the second high-side bidirectional switch HS2 and the second low-side bidirectional switch LS2 in the sector 2a' is the same as the pattern of ON/OFF control of each of the second high-side bidirectional switch HS2 and the second low-side bidirectional switch LS2 in the sector 1b'. That is, in the sector 2a', the controller 33 maintains the second high-side bidirectional switch HS2 and the second low-side bidirectional switch LS2 in the OFF state.

The pattern of ON/OFF control of the third high-side bidirectional switch HS3 in the sector 2a' is the same as the pattern of ON/OFF control of the first low-side bidirectional switch LS1 in the sector 1b'. The pattern of ON/OFF control of the third low-side bidirectional switch LS3 in the sector 2a' is the same as the pattern of ON/OFF control of the first high-side bidirectional switch HS1 in the sector 1b'.

As described above, the switching sequence 2a' for the sector 2a' defines eight combinations of ON/OFF states of the bidirectional switches TSW. Therefore, the combinations defined by the switching sequence 2a' are fewer than the combinations defined by the switching sequence 2a.

### (4-6. Other Transition Intervals)

As with the example mentioned above, in the sector 2b', the sector 3a', the sector 5b', and the sector 6a', which are transition intervals for the first voltage VA, the controller 33 maintains the first low-side bidirectional switch LS1 and the first high-side bidirectional switch HS1 in the OFF state at all times. Further, as for the bidirectional switches TSW other than the first low-side bidirectional switch LS1 and the first high-side bidirectional switch HS1, the controller 33 controls the corresponding switching elements in the same switching pattern as that used in the ON/OFF control during a specific interval temporally contiguous with each of these transition intervals.

In the sector 4b' and the sector 5a', which are transition intervals for the second voltage VB, the controller 33 maintains the second low-side bidirectional switch LS2 and the second high-side bidirectional switch HS2 in the OFF state at all times. Further, as for the bidirectional switches TSW other than the second low-side bidirectional switch LS2 and the second high-side bidirectional switch HS2, the controller 33 controls the corresponding switching elements in the same switching pattern as that used in the ON/OFF control during a specific interval temporally contiguous with each of these transition intervals.

In the sector 3b', the sector 4a', the sector 6b', and the sector 1a', which are transition intervals for the third voltage VC, the controller 33 maintains the third low-side bidirectional switch LS3 and the third high-side bidirectional switch HS3 in the OFF state at all times. Further, as for the bidirectional switches TSW other than the third low-side bidirectional switch LS3 and the third high-side bidirectional switch HS3, the controller 33 controls the corresponding switching elements in the same switching pattern as that used in the ON/OFF control during a specific interval temporally contiguous with each of these transition intervals.

### (5. Operation According to Present Embodiment)

In the example according to the embodiment mentioned above, the switching sequence 1b' defines eight combinations of ON/OFF states of the bidirectional switches TSW, which are fewer than the 14 combinations of ON/OFF states of the bidirectional switches TSW defined by the switching sequence 1b. More specifically, in the switching sequence 1b', the ON/OFF switching control performed at each of times t2, t3, t4, t9, t10, and t11 in the switching sequence 1b is not performed.

Now, it is assumed that during the first transition interval for the second voltage VB, the controller 33 controls individual switching elements according to the switching sequence 1b. Immediately before the second voltage VB becomes zero, PWM signals have a short pulse width. This may result in a situation where, for example, the twenty-sixth switching element S26 fails to switch from OFF to ON at time t4. As illustrated in Fig. 6, immediately before time t4, the second low-side bidirectional switch LS2 is ON in the positive direction. That is, in this state, the twenty-sixth switching element S26 is OFF, and current is flowing through the body diode of the twenty-sixth switching element S26. This means that if the twenty-sixth switching element S26 does not switch ON at time t4, and the sixteenth switching element S16 is switched OFF at time t5, a so-called reverse recovery current occurs in the twenty-sixth switching element S26. That is, if the sixteenth switching element S16 is switched OFF while current is flowing through the body diode of the twenty-sixth switching element S26, the current flowing through the body diode is cut off. This causes a reverse voltage to be applied to the twenty-sixth switching element S26. As a result, a reverse recovery current flows through the body diode of the twenty-sixth switching element S26. When this phenomenon occurs, a surge voltage is applied to the twenty-sixth switching element S26. This causes a relatively large electrical stress to be applied to the twenty-sixth switching element S26.

In the switching sequence 1b' according to the present embodiment, the ON/OFF states of switching elements are switched less frequently than in the switching sequence 1b. Therefore, in the switching sequence 1b', the interval from time t1' to time t2', and the interval from time t5' to time t6' are long in duration relative to one period Ts. This reduces the possibility that PWM signals may become extremely short immediately before the input voltage becomes zero.

### (6. Advantages according to Present Embodiment)

(1) According to the embodiment mentioned above, the combinations of ON/OFF states of switching elements defined by the second switching sequence are fewer than the combinations of ON/OFF states of switching elements defined by the first switching sequence.
   Due to the fewer combinations of ON/OFF states of switching elements in the second switching sequence corresponding to the first transition interval, the PWM signals corresponding to these combinations can be increased in pulse width. This may reduce the possibility that a particular switching element may fail to switch ON as intended. This in turn helps to reduce the possibility that switching elements may be subjected to electrical stress as a result of the reverse recovery phenomenon mentioned above.
(2) According to the embodiment mentioned above, during a transition interval, bidirectional switches TSW that receive a substantially zero input voltage are controlled by the controller 33 to be OFF at all times. In other words, among the combinations of ON/OFF states of switches defined by the second switching sequence, the state of the bidirectional switches TSW with an input voltage of zero is maintained OFF. For example, in the sector 1b', which is a first transition interval for the second voltage VB, the controller 33 maintains the second low-side bidirectional switch LS2 and the second high-side bidirectional switch HS2 in the OFF state at all times.
   Bidirectional switches TSW with an input voltage of zero undergo more frequent ON/OFF switching operations than other bidirectional switches TSW. This means that during a transition interval, PWM signals tend to have a short pulse width, which may make a particular switching element more susceptible to electrical stress. The configuration mentioned above therefore reduces the possibility of electrical stress being applied to switching elements constituting the bidirectional switches TSW whose input voltage is zero.
(3) According to the embodiment mentioned above, during a transition interval, the combinations of ON/OFF states of the bidirectional switches TSW other than the bidirectional switches TSW with an input voltage of zero are the same as the combinations of ON/OFF states of the bidirectional switches TSW during a specific interval that is temporally contiguous with the transition interval. This reduces the possibility of the switching pattern becoming complex. This also reduces the possibility of electrical stress being applied due to switching of switching patterns.
(4) According to the embodiment mentioned above, the combinations of ON/OFF states of switching elements defined by the third switching sequence are fewer than the combinations of ON/OFF states of switching elements defined by the first switching sequence. Further, the combinations of ON/OFF states of switching elements defined by each of the second switching sequence and the third switching sequence are fewer than the combinations of ON/OFF states of switching elements defined by the fourth switching sequence. As a result, PWM signals corresponding to one combination in a switching sequence can be increased in pulse width not only during the first transition interval but also during the second transition interval. This therefore helps to reduce the possibility of electrical stress being applied to switching elements.
(5) According to the embodiment mentioned above, the predetermined interval is greater than 0° and less than or equal to 5°. During a specific interval, the controller 33 controls individual bidirectional switches TSW according to one of the first and fourth switching sequences. These switching sequences make it possible to achieve zero-current switching or zero-voltage switching. This allows for relatively high power conversion efficiency during the specific interval. During a transition interval, the controller 33 controls individual bidirectional switches TSW according to one of the second and third switching sequences. As described above, these switching sequences make it possible to reduce electrical stress that would otherwise be applied to switching elements due to the reverse recovery phenomenon. Therefore, employing the above-mentioned predetermined interval makes it possible to reduce the possibility of electrical stress being applied to switching elements during the transition interval while allowing for high power conversion efficiency during the specific interval.

### <Variations>

The embodiment mentioned above can be implemented with variations described below. The embodiment mentioned above and variations described below can be implemented in combination with each other as long as no technical contradictions occur.
- The configuration of the power conversion device 10 is not limited to the example according to the above-mentioned embodiment. For example, the power conversion device 10 is not limited to a three-phase isolated AC-DC converter, and may also be applied to a non-isolated three-phase AC-DC converter. That is, the power conversion device 10 does not need to include one or more selected from the group consisting of the input-side low pass filter 20, the transformer circuit 40, the rectifier circuit 50, and the output-side low pass filter 60.

The three-phase AC power source 80 to be connected to the three external input terminals 11 is not limited to that of a three-phase, three-wire type but may be of a three-phase, four-wire type. Alternatively, the three-phase AC power source 80 may be of a delta-connected three-phase, three-wire type. The configuration of the power conversion device 10 may be changed as appropriate according to the type of the three-phase AC power source 80.

The input-side low pass filter 20 may include a plurality of capacitors connected between the phase lines to which the first voltage VA, the second voltage VB, and the third voltage VC are input.
- The switching elements constituting each bidirectional switch TSW are not limited to those in the example according to the above-mentioned embodiment. For example, the two switching elements of each bidirectional switch TSW may be P-channel MOSFETs. In this case, the drain terminals of the two switching elements of the bidirectional switch TSW are connected to each other.

The two switching elements of each bidirectional switch TSW may be transistors that allow current to flow in both the forward and reverse directions. In this case, the two switching elements are connected in series with their source terminals connected to each other. Specifically, each of the switching elements is, for example, a gallium nitride high electron mobility transistor (GaN-HEMT).
- The transformer circuit 40 does not need to include the fourth inductor L4. In this case, the leakage inductance of the transformer 41 can be utilized for resonance instead of the fourth inductor L4.
- The specific circuit configuration of the rectifier circuit 50 is not limited to that in the example according to the above-mentioned embodiment. For example, the rectifier circuit 50 may be a half-wave rectifier circuit.
- The number of intervals into which to divide each sector is not limited to that in the example according to the above-mentioned embodiment. For example, in the sector n, a sector corresponding to the sector nb' need not necessarily be defined. In this case, during the interval of X° < θ° < (X° + 30°), the controller 33 may control individual bidirectional switches TSW according to the switching sequence nb.

A transition interval and a specific interval may include a phase at which the input voltage is zero. For example, the interval corresponding to the sector na' may be (X° - 30°) < θ°≤ (X° - 25°), and the interval corresponding to the sector na may be (X° - 25°) < θ° ≤ X°.
- The number of combinations of ON/OFF states of the bidirectional switches TSW defined by each switching sequence is not limited to that in the example according to the above-mentioned embodiment. That is, the number of such combinations defined by each of the switching sequence na and the switching sequence nb may be less than or equal to 13, or may be greater than or equal to 15. The number of such combinations defined by each of the switching sequence na' and the switching sequence nb' may be less than or equal to 7, or may be greater than or equal to 9. It is to be noted, however, that the combinations of ON/OFF states of the bidirectional switches TSW defined by the second switching sequence need to be fewer than the combinations of ON/OFF states of the bidirectional switches TSW defined by the first switching sequence.
- The controller 33 may be configured to, during a transition interval, maintain in the OFF state not all of the bidirectional switches TSW corresponding to an input voltage of zero. For example, the controller 33 may be configured to, in the sector 1b' corresponding to the first transition interval for the second voltage VB, maintain in the OFF state not all of the switching elements constituting the second high-side bidirectional switch HS2 and the second low-side bidirectional switch LS2. For example, electrical stress on switching elements may be reduced even if the second high-side bidirectional switch HS2 is maintained ON in the positive direction and the second low-side bidirectional switch LS2 is maintained ON in the negative direction. In this case as well, the combinations of ON/OFF states of switching elements defined by the second switching sequence are fewer than the combinations of ON/OFF states of switching elements defined by the first switching sequence.
- During a transition interval, the combinations of ON/OFF states of the bidirectional switches TSW other than the bidirectional switches TSW with an input voltage of zero may differ from the combinations of ON/OFF states of the bidirectional switches TSW during a specific interval that is temporally contiguous with the transition interval. In this case as well, making the combinations of ON/OFF states of switching elements during the transition interval fewer than those during the specific interval allows for reduced electrical stress on switching elements.
- According to the above-mentioned embodiment, the controller 33 may be configured to perform a control according to the second switching sequence for at least one phase corresponding to an input voltage of zero. For example, the controller 33 may be configured to, in the sector 1b', perform a control according to the switching sequence 1b', and may be configured to, before and after other phases at which the corresponding input voltages are zero, not perform a control according to the switching sequence na' or the switching sequence nb'.
- According to the above-mentioned embodiment, the predetermined angle may be greater than 5°. The appropriate predetermined angle may vary depending on factors such as the operating frequency of the power conversion device 10.

### <Supplementary Notes>

The technical idea that can be derived from the embodiment and the variations mentioned above are described below.
[1] A power conversion circuit comprising: a first input terminal, a second input terminal, and a third input terminal that are connected to a three-phase AC power source and to which a first voltage, a second voltage, and a third voltage are respectively input, the first voltage, the second voltage, and the third voltage being AC voltages that differ in phase; a first output terminal and a second output terminal that are configured to output AC power; a plurality of bidirectional switches each connected between the first input terminal, the second input terminal, and the third input terminal, and the first output terminal and the second output terminal; and a controller capable of controlling the plurality of bidirectional switches according to a first switching sequence or a second switching sequence, the first switching sequence defining a plurality of combinations of ON/OFF states of the plurality of bidirectional switches and an order of switching the plurality of combinations, the second switching sequence defining, in a manner different from the first switching sequence, a plurality of combinations of ON/OFF states of the plurality of bidirectional switches and an order of switching the plurality of combinations, wherein an interval from a phase at which one of the first voltage, the second voltage, or the third voltage becomes zero to a phase separated from the phase by a predetermined angle is defined as a transition interval, wherein a phase interval temporally contiguous with the transition interval is defined as a specific interval, wherein the controller is configured to, during the specific interval, control the plurality of bidirectional switches according to the first switching sequence, and during the transition interval, control the plurality of bidirectional switches according to the second switching sequence, and wherein the plurality of combinations of ON/OFF states of the plurality of bidirectional switches defined by the second switching sequence are fewer than the plurality of combinations of ON/OFF states of the plurality of bidirectional switches defined by the first switching sequence.
[2] The power conversion circuit according to [1], wherein one selected from the group consisting of the first voltage, the second voltage, and the third voltage is defined as a specific voltage, wherein among the first input terminal, the second input terminal, and the third input terminal, an input terminal that receives input of the specific voltage is defined as a specific input terminal, wherein the plurality of bidirectional switches include a specific high-side bidirectional switch connecting between the specific input terminal and the first output terminal, and a specific low-side bidirectional switch connecting between the specific input terminal and the second output terminal, and wherein the controller is configured to, during the transition interval, cause the specific high-side bidirectional switch and the specific low-side bidirectional switch to be maintained OFF.
[3] The power conversion circuit according to [1] or [2], wherein one selected from the group consisting of the first voltage, the second voltage, and the third voltage is defined as a specific voltage, wherein among the first input terminal, the second input terminal, and the third input terminal, an input terminal that receives input of the specific voltage is defined as a first specific input terminal, wherein among the first input terminal, the second input terminal, and the third input terminal, an input terminal other than the first specific input terminal is defined as a second specific input terminal, wherein among the first input terminal, the second input terminal, and the third input terminal, an input terminal other than the first specific input terminal and the second specific input terminal is defined as a third specific input terminal, wherein the plurality of bidirectional switches include a second specific high-side bidirectional switch connecting between the second specific input terminal and the first output terminal, a second specific low-side bidirectional switch connecting between the second specific input terminal and the second output terminal, a third specific high-side bidirectional switch connecting between the third specific input terminal and the first output terminal, and a third specific low-side bidirectional switch connecting between the third specific input terminal and the second output terminal, and wherein a plurality of combinations of respective ON/OFF states of the second specific high-side bidirectional switch, the second specific low-side bidirectional switch, the third specific high-side bidirectional switch, and the third specific low-side bidirectional switch, and an order of switching the plurality of combinations, as defined by the first switching sequence, are identical to a plurality of combinations of respective ON/OFF states of the second specific high-side bidirectional switch, the second specific low-side bidirectional switch, the third specific high-side bidirectional switch, and the third specific low-side bidirectional switch, and an order of switching the plurality of combinations, as defined by the second switching sequence.
[4] The power conversion circuit according to any one of [1] to [3], wherein one selected from the group consisting of the first voltage, the second voltage, and the third voltage is defined as a specific voltage, wherein the controller is capable of controlling the plurality of bidirectional switches according to a third switching sequence, the third switching sequence defining, in a manner different from the first switching sequence and the second switching sequence, a plurality of combinations of ON/OFF states of the plurality of bidirectional switches and an order of switching the plurality of combinations, wherein the transition interval includes a first transition interval, the first transition interval being defined as an interval from a phase at which the specific voltage becomes zero to a phase temporally preceding the phase and separated from the phase by the predetermined angle, and a second transition interval, the second transition interval being defined as an interval from a phase at which the specific voltage becomes zero to a phase temporally following the phase and separated from the phase by the predetermined angle, the second transition interval temporally following and being contiguous with the first transition interval, wherein the controller is configured to, during the first transition interval, control the plurality of bidirectional switches according to the second switching sequence, and during the second transition interval, control the plurality of bidirectional switches according to the third switching sequence, and wherein the plurality of combinations of ON/OFF states of the plurality of bidirectional switches defined by the third switching sequence are fewer than the plurality of combinations of ON/OFF states of the plurality of bidirectional switches defined by the first switching sequence.
[5] The power conversion circuit according to [4], wherein the controller is capable of controlling the plurality of bidirectional switches according to a fourth switching sequence, the fourth switching sequence defining, in a manner different from the first switching sequence, the second switching sequence, and the third switching sequence, a plurality of combinations of ON/OFF states of the plurality of bidirectional switches and an order of switching the plurality of combinations, wherein the specific interval includes a first specific interval, the first specific interval being defined as an interval temporally preceding and contiguous with the first transition interval, and a second specific interval, the second specific interval being defined as an interval temporally following and contiguous with the second transition interval, wherein the controller is configured to, during the first specific interval, control the plurality of bidirectional switches according to the first switching sequence, and during the second specific interval, control the plurality of bidirectional switches according to the fourth switching sequence, and wherein the plurality of combinations of ON/OFF states of the plurality of bidirectional switches defined by each of the second switching sequence and the third switching sequence are fewer than the plurality of combinations of ON/OFF states of the plurality of bidirectional switches defined by the fourth switching sequence.
[6] The power conversion circuit according to any one of [1] to [5], wherein the predetermined angle is greater than 0° and less than or equal to 5°.
[7] A program for use in a power conversion circuit, the power conversion circuit including a first input terminal, a second input terminal, and a third input terminal that are connected to a three-phase AC power source and to which a first voltage, a second voltage, and a third voltage are respectively input, the first voltage, the second voltage, and the third voltage being AC voltages that differ in phase, a first output terminal and a second output terminal that are configured to output AC power, a plurality of bidirectional switches each connected between the first input terminal, the second input terminal, and the third input terminal, and the first output terminal and the second output terminal, and a controller capable of controlling the plurality of bidirectional switches according to a first switching sequence or a second switching sequence, the first switching sequence defining a plurality of combinations of ON/OFF states of the plurality of bidirectional switches and an order of switching the plurality of combinations, the second switching sequence defining, in a manner different from the first switching sequence, a plurality of combinations of ON/OFF states of the plurality of bidirectional switches and an order of switching the plurality of combinations, the plurality of combinations of ON/OFF states of the plurality of bidirectional switches defined by the second switching sequence being fewer than the plurality of combinations of ON/OFF states of the plurality of bidirectional switches defined by the first switching sequence, wherein an interval from a phase at which one of the first voltage, the second voltage, or the third voltage becomes zero to a phase separated from the phase by a predetermined angle is defined as a transition interval, and wherein a phase interval temporally contiguous with the transition interval is defined as a specific interval, the program causing the controller to, during the specific interval, control the plurality of bidirectional switches according to the first switching sequence, and during the transition interval, control the plurality of bidirectional switches according to the second switching sequence.

### Reference Signs List

- 10: power conversion device
- 20: input-side low pass filter
- 30: power conversion circuit
- 31A: first input terminal
- 31B: second input terminal
- 31C: third input terminal
- 32: output terminal
- 33: controller
- PG: program
- VA: first voltage
- VB: second voltage
- VC: third voltage
- TSW: bidirectional switch
- 40: transformer circuit
- 50: rectifier circuit
- 60: output-side low pass filter
- 70: load
- 80: three-phase AC power source
- Ip: primary current
- Vp: primary voltage

## Claims

1. A power conversion circuit comprising:
a first input terminal, a second input terminal, and a third input terminal that are connected to a three-phase AC power source and to which a first voltage, a second voltage, and a third voltage are respectively input, the first voltage, the second voltage, and the third voltage being AC voltages that differ in phase;
a first output terminal and a second output terminal that are configured to output AC power;
a plurality of bidirectional switches each connected between
the first input terminal, the second input terminal, and the third input terminal, and
the first output terminal and the second output terminal; and
a controller capable of controlling the plurality of bidirectional switches according to a first switching sequence or a second switching sequence, the first switching sequence defining a plurality of combinations of ON/OFF states of the plurality of bidirectional switches and an order of switching the plurality of combinations, the second switching sequence defining, in a manner different from the first switching sequence, a plurality of combinations of ON/OFF states of the plurality of bidirectional switches and an order of switching the plurality of combinations,
wherein an interval from a phase at which one of the first voltage, the second voltage, or the third voltage becomes zero to a phase separated from the phase by a predetermined angle is defined as a transition interval,
wherein a phase interval temporally contiguous with the transition interval is defined as a specific interval,
wherein the controller is configured to,
during the specific interval, control the plurality of bidirectional switches according to the first switching sequence, and
during the transition interval, control the plurality of bidirectional switches according to the second switching sequence, and
wherein the plurality of combinations of ON/OFF states of the plurality of bidirectional switches defined by the second switching sequence are fewer than the plurality of combinations of ON/OFF states of the plurality of bidirectional switches defined by the first switching sequence.

2. The power conversion circuit according to claim 1,
wherein one selected from the group consisting of the first voltage, the second voltage, and the third voltage is defined as a specific voltage,
wherein among the first input terminal, the second input terminal, and the third input terminal, an input terminal that receives input of the specific voltage is defined as a specific input terminal,
wherein the plurality of bidirectional switches include
a specific high-side bidirectional switch connecting between the specific input terminal and the first output terminal, and
a specific low-side bidirectional switch connecting between the specific input terminal and the second output terminal, and
wherein the controller is configured to, during the transition interval, cause the specific high-side bidirectional switch and the specific low-side bidirectional switch to be maintained OFF.

3. The power conversion circuit according to claim 1 or 2,
wherein one selected from the group consisting of the first voltage, the second voltage, and the third voltage is defined as a specific voltage,
wherein among the first input terminal, the second input terminal, and the third input terminal, an input terminal that receives input of the specific voltage is defined as a first specific input terminal,
wherein among the first input terminal, the second input terminal, and the third input terminal, an input terminal other than the first specific input terminal is defined as a second specific input terminal,
wherein among the first input terminal, the second input terminal, and the third input terminal, an input terminal 31 other than the first specific input terminal and the second specific input terminal is defined as a third specific input terminal,
wherein the plurality of bidirectional switches include
a second specific high-side bidirectional switch connecting between the second specific input terminal and the first output terminal,
a second specific low-side bidirectional switch connecting between the second specific input terminal and the second output terminal,
a third specific high-side bidirectional switch connecting between the third specific input terminal and the first output terminal, and
a third specific low-side bidirectional switch connecting between the third specific input terminal and the second output terminal, and
wherein a plurality of combinations of respective ON/OFF states of the second specific high-side bidirectional switch, the second specific low-side bidirectional switch, the third specific high-side bidirectional switch, and the third specific low-side bidirectional switch, and an order of switching the plurality of combinations, as defined by the first switching sequence, are identical to a plurality of combinations of respective ON/OFF states of the second specific high-side bidirectional switch, the second specific low-side bidirectional switch, the third specific high-side bidirectional switch, and the third specific low-side bidirectional switch, and an order of switching the plurality of combinations, as defined by the second switching sequence.

4. The power conversion circuit according to any one of claims 1 to 3,
wherein one selected from the group consisting of the first voltage, the second voltage, and the third voltage is defined as a specific voltage,
wherein the controller is capable of controlling the plurality of bidirectional switches according to a third switching sequence, the third switching sequence defining, in a manner different from the first switching sequence and the second switching sequence, a plurality of combinations of ON/OFF states of the plurality of bidirectional switches and an order of switching the plurality of combinations,
wherein the transition interval includes
a first transition interval, the first transition interval being defined as an interval from a phase at which the specific voltage becomes zero to a phase temporally preceding the phase and separated from the phase by the predetermined angle, and
a second transition interval, the second transition interval being defined as an interval from a phase at which the specific voltage becomes zero to a phase temporally following the phase and separated from the phase by the predetermined angle, the second transition interval temporally following and being contiguous with the first transition interval,
wherein the controller is configured to,
during the first transition interval, control the plurality of bidirectional switches according to the second switching sequence, and
during the second transition interval, control the plurality of bidirectional switches according to the third switching sequence, and
wherein the plurality of combinations of ON/OFF states of the plurality of bidirectional switches defined by the third switching sequence are fewer than the plurality of combinations of ON/OFF states of the plurality of bidirectional switches defined by the first switching sequence.

5. The power conversion circuit according to claim 4,
wherein the controller is capable of controlling the plurality of bidirectional switches according to a fourth switching sequence, the fourth switching sequence defining, in a manner different from the first switching sequence, the second switching sequence, and the third switching sequence, a plurality of combinations of ON/OFF states of the plurality of bidirectional switches and an order of switching the plurality of combinations,
wherein the specific interval includes
a first specific interval, the first specific interval being defined as an interval temporally preceding and contiguous with the first transition interval, and
a second specific interval, the second specific interval being defined as an interval temporally following and contiguous with the second transition interval,
wherein the controller is configured to,
during the first specific interval, control the plurality of bidirectional switches according to the first switching sequence, and
during the second specific interval, control the plurality of bidirectional switches according to the fourth switching sequence, and
wherein the plurality of combinations of ON/OFF states of the plurality of bidirectional switches defined by each of the second switching sequence and the third switching sequence are fewer than the plurality of combinations of ON/OFF states of the plurality of bidirectional switches defined by the fourth switching sequence.

6. The power conversion circuit according to any one of claims 1 to 5,
wherein the predetermined angle is greater than 0° and less than or equal to 5°.

7. A program for use in a power conversion circuit, the power conversion circuit including
a first input terminal, a second input terminal, and a third input terminal that are connected to a three-phase AC power source and to which a first voltage, a second voltage, and a third voltage are respectively input, the first voltage, the second voltage, and the third voltage being AC voltages that differ in phase,
a first output terminal and a second output terminal that are configured to output AC power,
a plurality of bidirectional switches each connected between
the first input terminal, the second input terminal, and the third input terminal, and
the first output terminal and the second output terminal, and
a controller capable of controlling the plurality of bidirectional switches according to a first switching sequence or a second switching sequence, the first switching sequence defining a plurality of combinations of ON/OFF states of the plurality of bidirectional switches and an order of switching the plurality of combinations, the second switching sequence defining, in a manner different from the first switching sequence, a plurality of combinations of ON/OFF states of the plurality of bidirectional switches and an order of switching the plurality of combinations,
the plurality of combinations of ON/OFF states of the plurality of bidirectional switches defined by the second switching sequence being fewer than the plurality of combinations of ON/OFF states of the plurality of bidirectional switches defined by the first switching sequence,
wherein an interval from a phase at which one of the first voltage, the second voltage, or the third voltage becomes zero to a phase separated from the phase by a predetermined angle is defined as a transition interval, and
wherein a phase interval temporally contiguous with the transition interval is defined as a specific interval,
the program causing the controller to,
during the specific interval, control the plurality of bidirectional switches according to the first switching sequence, and
during the transition interval, control the plurality of bidirectional switches according to the second switching sequence.
